# EUROPEAN PATENT APPLICATION

(11) **EP 4 764 756 A1**
(43) Date of publication of application: **24.06.2026**
(21) Application number: 25152609.1
(22) Date of filing: 17.01.2025
(51) Int. Cl.: G05B 23/02, G07C 5/08

(54) **SMART SYSTEM FOR VEHICLE FAULT PREDICTION AND METHOD THEREOF**

(30) Priority: 23.12.2024 TW 113150262
(71) Applicant: EGK Technology Co., Ltd., Kaohsiung City 814037 (TW)
(72) Inventor: Lin, Chih-Hung, 814037 Kaohsiung City (TW); Huang, Yu-Cheng, 814037 Kaohsiung City (TW)
(74) Representative: Stevens Hewlett & Perkins

(57) **Abstract**

Provided is a smart system for vehicle fault prediction, including: an in-vehicle diagnosis system, a client to-be-diagnosed device set, a diagnosis management platform, a database, and a smart analysis engine. A diagnostic task script of the management platform is parsed, and a host/client interaction module, a safety module, and a diagnostic module perform the diagnostic task. The in-vehicle diagnostic engine transmits the diagnostic result to the diagnostic management platform, which sends the diagnostic result to the database, which then stores the diagnostic result and transmits to the smart analysis engine, which analyzes the diagnostic results and infers the potential risk of vehicle failure. Furthermore, the present invention also provides a smart method for vehicle fault prediction.

## Description

### BACKGROUND OF THE INVENTION

### 1. Field of the Invention

The present invention relates generally to a technical field of vehicle diagnosis, and more particularly, to a smart system and method for vehicle fault prediction by collecting vehicle data and artificial intelligence (AI) technology.

### 2. The Prior Arts

With the continuous progress of automobile technology, more and more electronic control units (ECU) and sensors are installed inside vehicles. These components can monitor the operating status of the vehicle in real time. However, current vehicle diagnostic systems mainly rely on vehicle owners or technicians to obtain diagnostic information through the on-board diagnostics II (OBD-II), and cannot proactively predict potential fault problems. This process often requires the participation of professionals and is usually carried out after the vehicle breaks down, so it cannot effectively prevent serious mechanical failure or driving risks.

On the other hand, for car manufacturers, the cost of developing a vehicle fault prediction system is quite high and the unit price is also high, and it needs to be developed separately according to different fault problems. In addition, car manufacturers can easily deal with known faults, but unknown and complex faults often require factory recalls or site trips to deal with. This approach is inefficient and results in high costs. Furthermore, if the diagnostic data isolation method is used, it will be difficult to collect vehicle information, and it will be difficult to form a systematic and standardized diagnostic knowledge base based on refurbishment experience.

Furthermore, for car owners, after the vehicle breaks down, they can only passively wait for repairs. It is impossible to predict the time and location of the failure, and it is impossible to clearly understand the failure information. At the same time, because it is impossible to predict which part of the vehicle is about to fail, the car service plant cannot prepare in advance, resulting in a long maintenance cycle and poor user experience.

### SUMMARY OF THE INVENTION

### [Problem to be solved by the invention]

It can be seen from the aforementioned known technologies that it is currently impossible to provide an effective vehicle fault prediction system and method. In order to better save development costs, improve user experience, reduce vehicle risks, warranty costs, and compensate for the problem of low maintenance efficiency and poor maintenance outcomes caused by the shortage of professional maintenance personnel after the vehicle becomes intelligent, it is necessary to develop a remote smart vehicle diagnosis and fault prediction system and method that combines diagnosis with the Internet of Vehicles and big data, which is also a future trend.

### [Technical means to solve the problem]

A smart system for vehicle fault prediction includes: an in-vehicle diagnostic system, installed on an electronic control unit (ECU) in a vehicle; the in-vehicle diagnostic system includes an in-vehicle diagnostic engine, a host/client interaction module, a safety model, a diagnostic module, a unified diagnostic service client of high-level electronic control units, and a unified diagnostic service client of low-level electronic control units; the in-vehicle diagnostic engine is connected to the host/client interaction module, the safety module, and the diagnostic module; a client to-be-diagnosed equipment set, installed in the vehicle, the client to-be-diagnosed equipment set includes a unified diagnostic service server of high-level electronic control units, and a unified diagnosis service server of low-level electronic control units, a plurality of high-level electronic control units, and a plurality of low-level electronic control units, the unified diagnostic service server of the high-level electronic control units is connected to the high-level electronic control units, and the unified diagnostic service server of low-level electronic control units is connected to the low-level electronic control units; a diagnostic management platform, connected to the in-vehicle diagnostic system; a database, connected to the diagnostic management platform, and storing a plurality of diagnostic data; and a smart analysis engine, connected to the database and the diagnostic management platform; wherein, the safety module and the diagnostic module of the in-vehicle diagnostic system use the unified diagnostic service client of high-level electronic control units and the unified diagnostic service client of low-level electronic control units to perform data exchange, security authentication, and read and write operations to the high-level electronic control units and the low-level electronic control units with the unified diagnostic service server of high-level electronic control units and the unified diagnostic service server of low-level electronic control units of the client's equipment set to-be-diagnosed; wherein the in-vehicle diagnostic engine of the in-vehicle diagnostic system receives at least one diagnostic task script from the diagnostic management platform and parses the diagnostic task script, and the host/client interaction module, the safety module, and the diagnostic module perform diagnostic tasks; wherein the in-vehicle diagnostic engine transmits a diagnostic result to the diagnostic management platform, and the diagnostic management platform transmits the diagnostic result to the database, the database stores the diagnosis result and transmits the diagnosis result to the smart analysis engine, and the smart analysis engine analyzes the diagnosis result and infers potential risks of failure of the vehicle.

Preferably, the diagnosis management platform further includes a vehicle management module, a remote diagnosis application module, a diagnosis task management module, and a user management module; the vehicle management module is used to generate a vehicle to-be-diagnosed list, the remote diagnosis application module is used to diagnose the client to-be-diagnosed equipment set and report the potential risks of failure of the vehicle to a user and/or a manager, the diagnosis task management module is used to generate the diagnosis task scripts and checking a plurality of diagnosis result history records, and the user management module is used to generate a plurality of new users and grant corresponding platform permissions.

Preferably, the smart analysis engine further includes an expert system and a fault code calculation module; the expert system includes a vehicle electronic control unit topology map, the fault code calculation module is used to perform calculation matching and derive the potential risk of failure of the vehicle targeting at a plurality of sensors, a power system, and/or the electronic control unit topology map of the vehicle.

Preferably, the expert system further includes data identifiers and standardized fault codes for each of the high-level electronic control units and the low-level electronic control units.

Preferably, the security module and the diagnostic module are connected through a controller area network and perform data exchange, security authentication, and read and write operations to the high-level electronic control units the low-level electronic control units through the unified diagnostic service client of high-level electronic control units and the unified diagnostic service client of low-level electronic control units.

Furthermore, the present invention also provides a smart method for vehicle fault prediction, including the following steps: a diagnostic management platform generating a diagnostic vehicle information of a vehicle and a diagnostic task script corresponding to the vehicle, wherein the vehicle having a client to-be-diagnosed equipment set, the client to-be-diagnosed equipment set comprising a unified diagnostic service server for high-level electronic control units, a unified diagnostic service server for low-level electronic control units, a plurality of high-level electronic control units, and a plurality of low-level electronic control units, the unified diagnostic service server of high-level electronic control units being connected to the high-level electronic control units, and the unified diagnostic service server of low-level electronic control units being connected to the low-level electronic control units; an in-vehicle diagnostic engine of an in-vehicle diagnostic system receiving and parsing the diagnostic task script, wherein the in-vehicle diagnostic system being installed on an electronic control unit in the vehicle, wherein the in-vehicle diagnostic system comprising the in-vehicle diagnostic engine, a host/client interaction module, a safety module, a diagnostic module, a unified diagnostic service client of high-level electronic control units, and a unified diagnostic service client of low-level electronic control units, the in-vehicle diagnostic engine being connected to the host/client interaction module, the safety module and the diagnostic module; the host/client interaction module obtaining a vehicle status and information of the vehicle; the safety module and the diagnostic module using the unified diagnostic service client of high-level electronic control units and the unified diagnostic service client of low-level electronic control units to perform data exchange, security authentication, and read and write operations to the high-level electronic control units and the low-level electronic control units with the unified diagnostic service server of high-level electronic control units and the unified diagnostic service server of low-level electronic control units of the client to-be-diagnosed equipment set; and the in-vehicle diagnostic engine transmitting a diagnostic result to the diagnostic management platform, and the diagnostic management platform then transmitting the diagnosis results to a database, the database storing the diagnosis result and transmitting the diagnosis result to a smart analysis engine, and the smart analysis engine analyzing the diagnosis result and inferring potential risks of failure of the vehicle.

Preferably, in the smart method for vehicle fault prediction of the present invention, the diagnosis management platform further includes a vehicle management module, a remote diagnosis application module, a diagnosis task management module, and a user management module; the vehicle management module is used to generate a vehicle to-be-diagnosed list, the remote diagnosis application module is used to diagnose the client to-be-diagnosed equipment set and report the potential risks of failure of the vehicle to a user and/or a manager, the diagnosis task management module is used to generate the diagnosis task scripts and checking a plurality of diagnosis result history records, and the user management module is used to generate a plurality of new users and grant corresponding platform permissions.

Preferably, in the smart method for vehicle fault prediction of the present invention, the smart analysis engine further includes an expert system and a fault code calculation module; the expert system includes a vehicle electronic control unit topology map, the fault code calculation module is used to perform calculation matching and derive the potential risk of failure of the vehicle targeting at a plurality of sensors, a power system, and/or the electronic control unit topology map of the vehicle.

Preferably, in the smart method for vehicle fault prediction of the present invention, the expert system further includes data identifiers and standardized fault codes for each of the high-level electronic control units and the low-level electronic control units.

Preferably, in the step of obtaining the vehicle status and information of the vehicle by the host/client interaction module, the host/client interaction module confirms the current vehicle status of the vehicle, comprising vehicle speed, gear, or power, to avoid the high-level electronic control units and these low-level electronic control units affect driving safety during diagnosis.

### [Efficacy of Invention]

The smart system and method for vehicle fault prediction of the present invention can not only perform big data analysis based on historical diagnostic data, but also use the stored historical diagnostic data to infer that the current diagnostic results indicate where the risk of failure is high in the vehicle. The smart analysis engine further performs calculation matching on the vehicle's internal system, allowing users and/or managers to obtain the vehicle's potential risk of failures in a short period of time and prevent failures in advance.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic structural view of a smart system for vehicle fault prediction according to an embodiment of the present invention.
FIG. 2 is a schematic view of the architecture of a smart system for vehicle fault prediction according to an embodiment of the present invention.
FIG. 3 is a schematic structural view of a diagnosis management platform according to another embodiment of the present invention.
FIG. 4 is a schematic structural view of a smart analysis module according to another embodiment of the present invention.
FIG. 5 is a flow chart of a smart method for vehicle fault prediction according to an embodiment of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

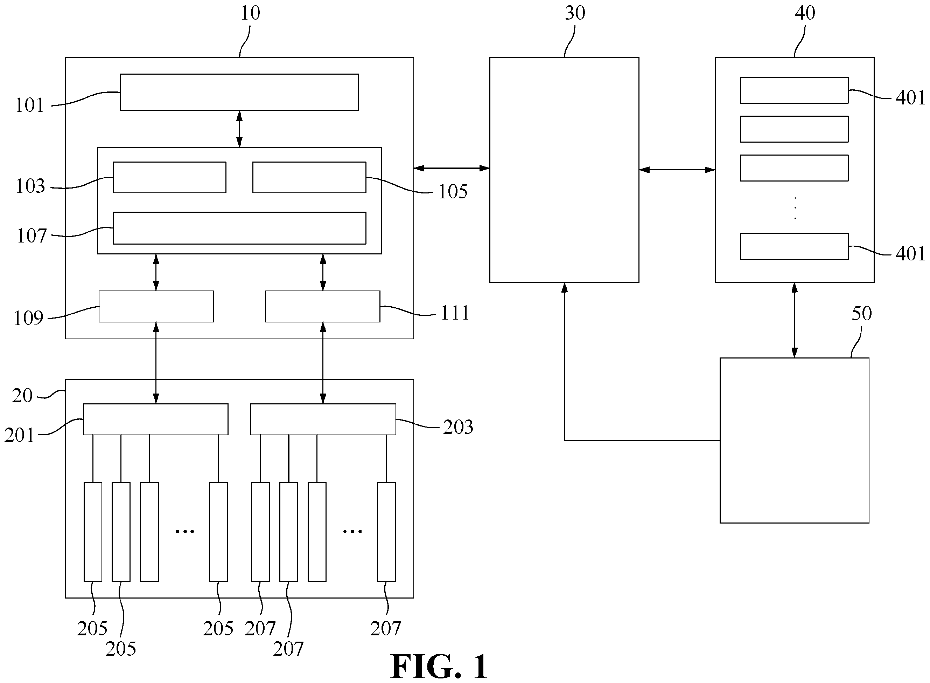

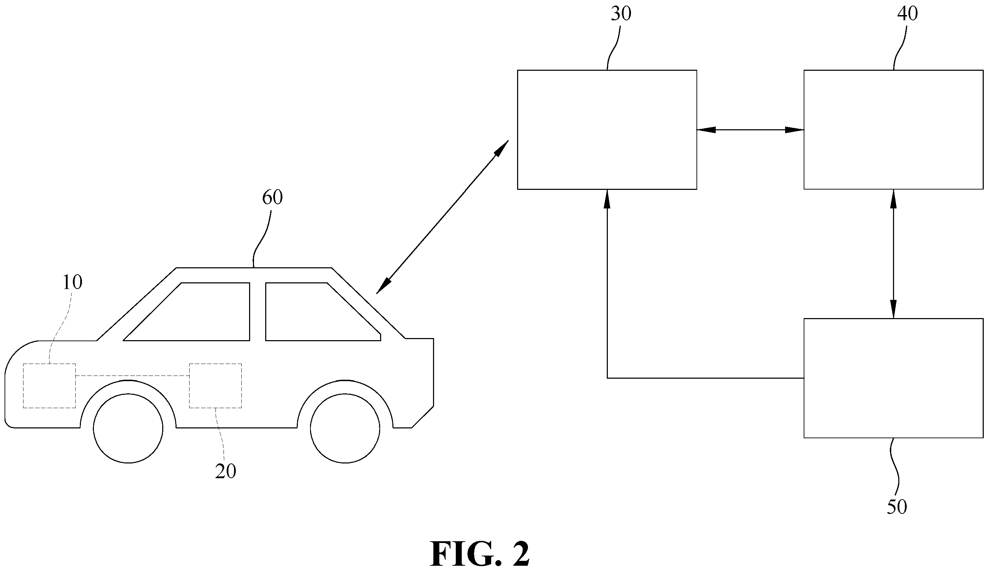

FIG. 1 is a schematic view illustrating the structure of a smart system for vehicle fault prediction according to an embodiment of the present invention; FIG. 2 is a schematic view illustrating the structure of a smart system for vehicle fault prediction according to an embodiment of the present invention. Refer to FIGS. 1 and 2. An embodiment of the present invention provides a smart system for vehicle fault prediction, which includes an in-vehicle diagnosis system 10, a client to-be-diagnosed equipment set 20, a diagnosis management platform 30, a database 40, and a smart analysis engine 50. The in-vehicle diagnostic system 10 is installed on an electronic control unit (not shown in the figure) in a vehicle 60. More specifically, for example, the in-vehicle diagnostic system 10 can be installed on a certain high-level electronic control unit (not shown in the figure). The in-vehicle diagnostic system 10 includes an in-vehicle diagnostic engine 101, a host/client interaction module 103, a safety module 105, a diagnostic module 107, a unified diagnostic service client of high-level electronic control units 109, and a unified diagnostic service client of low-level electronic control units 111. The in-vehicle diagnostic engine 101 is connected to the host/client interaction module 103, the safety module 105, and the diagnostic module 107. Wherein, the in-vehicle diagnostic system 10 can be connected to the host/client interaction module 103, the safety module 105, and the diagnostic module 107 through an intranet, the diagnostic management platform 30 can be connected to the in-vehicle diagnostic system 10 through the network, and the diagnostic management platform 30 can be an application program installed on a computer device or in smart mobile devices.

The client to-be-diagnosed equipment set 20 is installed in the vehicle 60. The client to-be-diagnosed equipment set 20 includes a unified diagnostic service server of high-level electronic control units 201, a unified diagnostic service server 201 of low-level electronic control units 203, a plurality of high-level electronic control units 205, and a plurality of low-level electronic control units 207. The unified diagnostic service server of high-level electronic control units 201 is connected to the high-level electronic control units 205. The unified diagnostic service server of low-level electronic control units 203 is connected to low-level electronic control units 207. The diagnostic management platform 30 is connected to the in-vehicle diagnostic system 10. The database 40 is connected to the diagnosis management platform 30, and the database 40 stores a plurality of diagnosis data 401. The smart analysis engine 50 is connected to the database 40 and the diagnosis management platform 30.

Wherein, the safety module 105 and the diagnostic module 107 of the in-vehicle diagnostic system 10 use the unified diagnostic service client of high-level electronic control units 109 and the unified diagnostic service client of low-level electronic control units 111 to perform data exchange, security authentication, and read and write operations to the high-level electronic control units 205 and the low-level electronic control units 207 with the unified diagnosis service server of high-level electronic control units 201 and the unified diagnosis service server of low-level electronic control units 203 of the client to-be-diagnosed equipment set 20. In addition, in an embodiment of the present invention, the security module 105 and the diagnostic module 107 can perform the aforementioned data exchange, security authentication, and read and write operations electronic control units via the controller area network (CAN), and in other embodiments of the present invention, operations can be performed through other network connection methods.

On the other hand, the in-vehicle diagnostic engine 101 of the in-vehicle diagnostic system 10 will receive and parse at least one diagnostic task script (not shown in the figure) from the diagnostic management platform 30, and the diagnostic task script will be used by the host/client interaction module 103, the security module 105, and the diagnostic module 107 to perform diagnostic tasks. Furthermore, the in-vehicle diagnosis engine 101 will transmit a diagnosis result to the diagnosis management platform 30, and the diagnosis management platform 30 will then transmit the diagnosis result to the database 40. The database 40 will store the diagnosis result and transmit the diagnosis result to the smart analysis engine 50. Finally, the smart analysis engine 50 will analyze the diagnosis result and infer the potential risk of failures of the vehicle 60. The diagnosis management platform 30 can receive the potential risk of failure report made by the smart analysis engine 50, and then report the potential risk of failures to the user and/or manager of the vehicle 60.

For example, if the diagnosis task script is an ECU transmission problem diagnosis script, the in-vehicle diagnosis engine 101 will analyze the script after receiving the ECU transmission problem diagnosis script, and the host/client interaction module 103, safety module 105, and the diagnostic module 107 perform a diagnostic task. The diagnostic task is to detect whether each ECU has a fault or a diagnostic trouble code (DTC). After the detection is completed, a diagnostic result will be generated, and the smart analysis engine 50 will analyze, based on the diagnosis result, whether there is a chance of a single ECU function failure or a failure caused by transmission problems in the future. In other words, because the database 40 stores diagnostic data 401 related to the fault problem, the smart analysis engine 50 can perform big data analysis based on the diagnostic data 401, and infer that for the current diagnostic result of the vehicle 60, based on the stored past diagnostic data 401, the probability of a single ECU function failure is high, or the failure probability is high due to transmission problems, so that the user or manager of the vehicle 60 can know where the future risk of failure of the vehicle 60 would be through the prediction result of the smart analysis engine 50.

In another example, if the diagnostic task script is a battery-dependent ECU troubleshooting diagnosis script, the in-vehicle diagnostic engine 101 will analyze the script after receiving the battery-dependent ECU troubleshooting diagnosis script, and use the host/client interaction module 103, the safety module 105, and the diagnostic module 107 to perform a diagnostic task. The diagnostic task is to detect the battery-related ECU in the vehicle 60 and confirm whether there are faults or DTCs in the battery-related ECU. After the detection is completed, the smart analysis engine 50 will analyze whether there is a chance of battery-dependent ECU-related faults occurring in the future based on the diagnosis result. Similarly, because the database 40 stores diagnostic data 401, the smart analysis engine 50 can perform big data analysis based on the diagnostic data 401 to infer whether the current diagnostic result has a probability of causing battery-dependent ECU-related fault problems, so as to allow the user or manager of the vehicle 60 to know the future risk of failure of the battery-dependent ECU of the vehicle 60 through the prediction results of the smart analysis engine 50.

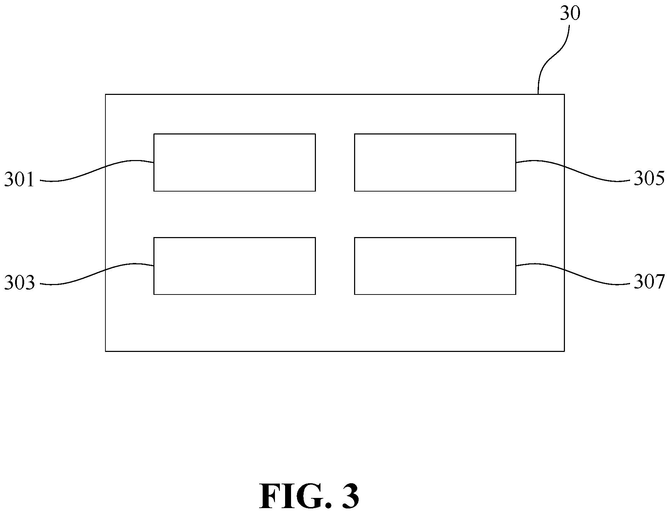

FIG. 3 is a schematic view illustrating the structure of a diagnosis management platform according to another embodiment of the present invention. Refer to FIGS. 1, 2, and 3. In another embodiment of the present invention, the diagnosis management platform 30 further includes a vehicle management module 301, a remote diagnosis application module 303, a diagnosis task management module 305, and a user management module 307. The vehicle management module 301 is used to generate a list of to-be-diagnosed vehicles. The remote diagnosis application module 303 can be used to diagnose the client to-be-diagnosed equipment set 20 and report the potential risks of failure of the vehicle 60 to a user and/or a manager. The task management module 305 is used to generate diagnostic task scripts and check multiple diagnostic result history records, and the user management module 307 is used to generate multiple new users and grant corresponding platform permissions. In other words, users and/or managers can generate diagnostic task scripts through the diagnostic management platform 30 and input the list of vehicles to be diagnosed, so as to predict the risk of failures of each vehicle 60 at any time.

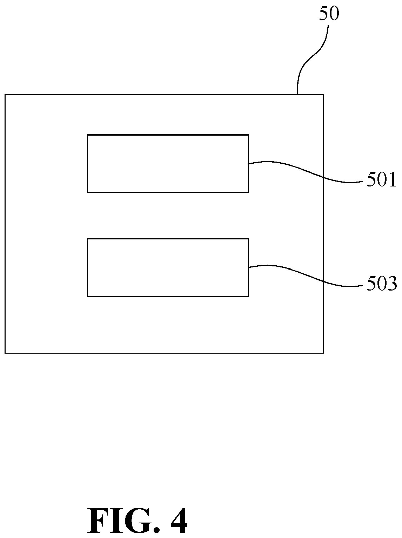

FIG. 4 is a schematic view illustrating the structure of a smart analysis module according to yet another embodiment of the present invention. Refer to FIGS. 1, 2, 3, and 4. In yet another embodiment of the present invention, the smart analysis engine 50 further includes an expert system 501 and a fault code calculation module 503. The expert system 501 includes a vehicle electronic control unit topology map. The fault code calculation module 503 can perform calculation matching on a plurality of sensors, power systems, and/or electronic control unit topology map of the vehicle 60 and infer the potential fault risks of the vehicle. Therefore, the fault code calculation module 503 can operate with the expert system 501 to read the topology map of the vehicle ECUs and understand the series connection topology of all electronic control units, and determine whether the prediction is a certain ECU has a single fault or all ECUs on the same route hare faulty based on the diagnosis results transmitted by the in-vehicle diagnostic engine 101.

Furthermore, the expert system 501 will also provide the data identifier (DID) and standardized diagnostic trouble code, DTC) of each ECU, and convert the raw data into a database file (DBC). Because each ECU has its own address (Address), this address can be used to confirm which ECU it is. During the conversion process, DBC can display which ECU has a fault and the related fault factor based on DID, DTC and Address; the expert system 501 can intuitively predict what kind of fault problems will occur in the future through the information converted by DBC.

On the other hand, the car's Electronic Stability Program (ESP) system is designed to improve driving safety, especially under extreme driving conditions, by automatically adjusting the vehicle's traction and stability to prevent out of control. However, ESP faults are related to many sensor ECUs, anti-lock braking system (ABS), power systems, and its own ESP ECU. Therefore, detecting EPS faults is usually complex and time-consuming. Generally, the car factory technicians use the OBD-II diagnostic tool to read the fault codes one by one and conduct further inspection and repair. After receiving these sensors, power system, and/or ECU topology map, the fault code calculation module 503 of the present invention will perform matching calculations and derive the possibility of potential ESP faults, and can also collect data from each ECU to provide clarification of the reasons, so that the results of the original complex detection can be obtained in a short time and even prevent failures in advance. Wherein, the fault code calculation module 503 will match each fault factor through logical calculation. Each fault may have a corresponding number of various reasons, the fault with a higher matching ratio will be listed in the potential fault risk list, and the cause of each fault will be stored in the database 40 for classification and storage.

In summary, the smart analysis engine 50 in the smart system for vehicle fault prediction of the present invention can not only perform big data analysis based on the diagnostic data 401, infer where the risk of failure is high in the vehicle 60 according to the current diagnosis result based on the stored past diagnostic data 401, but the expert system 501 and the fault code calculation module 503 can also be used to further perform calculation matching on the internal system of the vehicle 60, so that the user or manager can obtain the potential risk of failure and prevent failures of the vehicle 60 in advance.

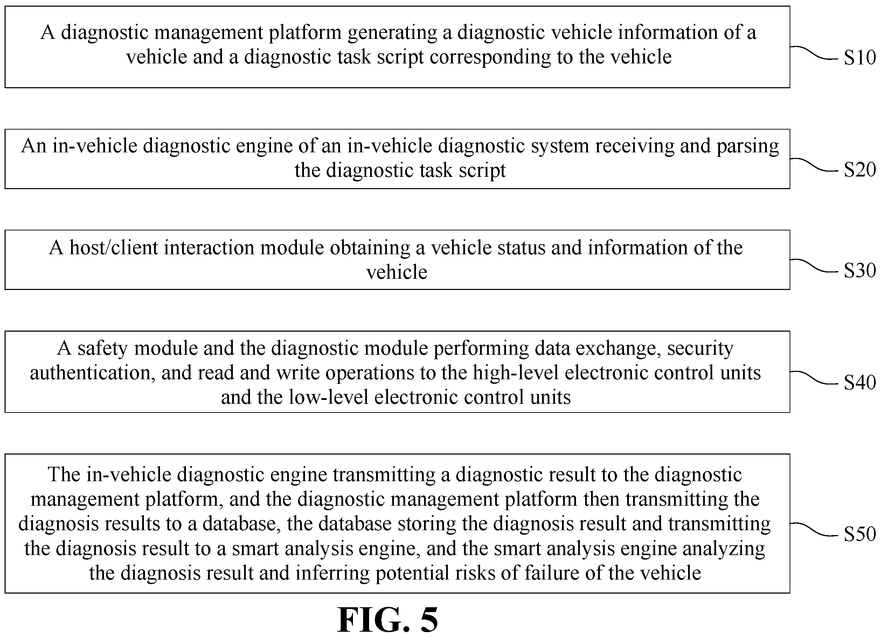

FIG. 5 is a flow chart illustrating a smart method for vehicle fault prediction according to an embodiment of the present invention. Refer to FIGS. 1, 2, and 5. The smart method for vehicle fault prediction according to an embodiment of the present invention includes steps S10 to S50. Step S10 is: a diagnosis management platform 30 generates a diagnosis vehicle information of a vehicle 60 and a corresponding diagnostic task script of the vehicle 60, the diagnostic task scrip includes a plurality of tasks, wherein the vehicle 60 includes a client to-be-diagnosed equipment set 20, and the client to-be-diagnosed equipment set 20 includes a unified diagnostic service server for high-level electronic control units 201, a unified diagnostic service server of low-level electronic control units 203, a plurality of high-level electronic control units 205, and a plurality of low-level electronic control units 207. The unified diagnostic service server of high-level electronic control unit 201 is connected to the high-level electronic control units 205. The unified diagnostic service server of low-level electronic control units 203 is connected to the low-level electronic control units 207. In addition, the diagnostic vehicle information may include the license plate number, vehicle owner information, year of manufacture, historical maintenance data, and other information of the vehicle 60.

In Step S20, an in-vehicle diagnostic engine 101 of an in-vehicle diagnostic system 10 receives and parses the diagnostic task script, wherein the in-vehicle diagnostic system 10 is installed on an ECU in the vehicle 60, such as a certain high-level ECU, wherein the in-vehicle diagnostic system 10 includes an in-vehicle diagnostic engine 101, a host/client interaction module 103, a safety module 105, a diagnostic module 107, and a unified diagnosis service client of high-level electronic control units 109, and a unified diagnostic service client of low-level electronic control units 111, the in-vehicle diagnostic engine 101 are connected to the host/client interaction module 103, the safety module 105, and the diagnostic module 107.

In Step S30, the host/client interaction module 103 obtains the vehicle status and information of the vehicle 60; wherein, the host/client interaction module 103 will confirm the current vehicle status of the vehicle 60, such as vehicle speed, gear, or power to prevent high-level electronic control units 205 and low-level electronic control units 207 from affecting driving safety during diagnosis.

In Step S40, the security module 105 and the diagnostic module 107 use the unified diagnostic service client of high-level electronic control units 109 and the unified diagnostic service client of low-level electronic control units 111 to perform data exchange, security authentication, and read and write operations to high-level electronic control units 205 and low-level electronic control units 207 with the unified diagnostic service server of high-level electronic control units 201 and the unified diagnostic service server of low-level electronic control units 203 of the client to-be-diagnosed equipment set 20.

In Step S50, the in-vehicle diagnosis engine 101 transmits a diagnosis result to the diagnosis management platform 30, and the diagnosis management platform 30 then transmits the diagnosis result to the database 40. The database 40 stores the diagnosis result and transmits the diagnosis result to a smart analysis engine 50. The smart analysis engine 50 analyzes the diagnosis result and infers the potential risk of failure of the vehicle 60. The diagnosis management platform 30 can receive the potential risk of failure report generated by the smart analysis engine 50 and then report the potential risk of failure. The report is sent back to the user and/or manager of the vehicle 60. Wherein, the smart analysis engine 50 can perform big data analysis based on the diagnostic data 401 stored in the database 40 to predict what kind of related fault problems the current diagnosis result may cause in the vehicle 60, so as to allow the users of the vehicle 60 or the manager to know the risk of future failure of the vehicle 60 through the prediction results of the smart analysis engine 50.

Refer to FIGS. 1 to 3 again. In the smart method for vehicle fault prediction of the present invention, the diagnosis management platform 30 further includes a vehicle management module 301, a remote diagnosis application module 303, and a diagnosis task management module 305, and a user management module 307. The vehicle management module 301 generates a list of to-be-diagnosed vehicles. The remote diagnosis application module 303 is used to diagnose the client to-be-diagnosed equipment set 20 and report the potential risk of failure of the vehicle 60 to a user and/or a manager. The task management module 305 is used to generate diagnostic task scripts and check multiple diagnostic result history records, and the user management module 307 is used to generate multiple new users and grant corresponding platform permissions. In other words, users and/or managers can generate diagnostic task scripts through the diagnostic management platform 30 and input the list of vehicles for inspection, so as to predict the risk of failure of each vehicle 60 at any time.

Refer to FIGS. 1 to 4 again. In the smart method for vehicle fault prediction of the present invention, the smart analysis engine 50 further includes an expert system 501 and a fault code calculation module 503. The expert system 501 includes a vehicle electronic control unit topology map. The fault code calculation module 503 can perform calculation matching on a plurality of sensors, power systems, and/or electronic control unit topology map of the vehicle 60 and infer the potential risk of failure of the vehicle. Therefore, the fault code calculation module 503 can operate with the expert system 501 to read the topology map of the vehicle ECU and understand the serial connection topology of all electronic control units, and determine whether the prediction is a certain single ECU experiencing fault or all ECUs on the same route have problems based on the diagnosis results transmitted by the in-vehicle diagnostic engine 101.

In addition, the expert system 501 further includes the data identifier (DID) and standardized diagnostic trouble code, DTC) of each ECU, and convert the raw data into a database file (DBC). Because each ECU has its own address (Address), this address can be used to confirm which ECU it is. During the conversion process, DBC can display which ECU has a fault and the related fault factor based on DID, DTC and Address; the expert system 501 can intuitively predict what kind of fault problems will occur in the future through the information converted by DBC

As aforementioned, the present invention provides a smart system for vehicle fault prediction and method thereof. The advantages and effects of the present invention are as follows: 1. Increase convenience: the car owner can check the vehicle status through the diagnostic management platform anytime and anywhere without the need to go to the service center. 2. Reduce repair time: Technicians can obtain the potential risk of vehicle failure before diagnosing the problem to shorten debugging time. 3. Reduce maintenance costs: Predictive maintenance can help car owners perform maintenance before problems become serious, thereby reducing maintenance costs. 4. Enhance safety: Early detection of faults can help improve vehicle safety and reduce the risk of accidents. 5. Data analysis: By collecting and analyzing operating data, in-depth insights into driving behavior and vehicle performance can be obtained to help optimize usage. 6. Universality of the expert system: The expert system is based on the experience and knowledge of car factory technicians. Since the basic principles of vehicle failure analysis follows a shared main context, the introduction of the smart system for vehicle fault prediction of the present invention can be exempted from restrictions on the applicability to only the same vehicle type.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A smart system for vehicle fault prediction, comprising:
an in-vehicle diagnostic system, installed on an electronic control unit (ECU) in a vehicle; the in-vehicle diagnostic system comprising an in-vehicle diagnostic engine, a host/client interaction module, a safety model, a diagnostic module, a unified diagnostic service client of high-level electronic control units, and a unified diagnostic service client of low-level electronic control units; the in-vehicle diagnostic engine being connected to the host/client interaction module, the safety module, and the diagnostic module;
a client to-be-diagnosed equipment set, installed in the vehicle, the client to-be-diagnosed equipment set comprising a unified diagnostic service server of high-level electronic control units, and a unified diagnosis service server of low-level electronic control units, a plurality of high-level electronic control units, and a plurality of low-level electronic control units, the unified diagnostic service server of the high-level electronic control units being connected to the high-level electronic control units, and the unified diagnostic service server of low-level electronic control units being connected to the low-level electronic control units;
a diagnostic management platform, connected to the in-vehicle diagnostic system;
a database, connected to the diagnostic management platform, and storing a plurality of diagnostic data; and
a smart analysis engine, connected to the database and the diagnostic management platform;
wherein, the safety module and the diagnostic module of the in-vehicle diagnostic system use the unified diagnostic service client of high-level electronic control units and the unified diagnostic service client of low-level electronic control units to perform data exchange, security authentication, and read and write operations to the high-level electronic control units and the low-level electronic control units with the unified diagnostic service server of high-level electronic control units and the unified diagnostic service server of low-level electronic control units of the client's equipment set to-be-diagnosed;
wherein the in-vehicle diagnostic engine of the in-vehicle diagnostic system receives at least one diagnostic task script from the diagnostic management platform and parses the diagnostic task script, and the host/client interaction module, the safety module, and the diagnostic module perform diagnostic tasks;
wherein the in-vehicle diagnostic engine transmits a diagnostic result to the diagnostic management platform, and the diagnostic management platform transmits the diagnostic result to the database, the database stores the diagnosis result and transmits the diagnosis result to the smart analysis engine, and the smart analysis engine analyzes the diagnosis result and infers potential risks of failure of the vehicle.

2. The smart system for vehicle fault prediction according to claim 1, wherein the diagnosis management platform further includes a vehicle management module, a remote diagnosis application module, a diagnosis task management module, and a user management module; the vehicle management module is used to generate a vehicle to-be-diagnosed list, the remote diagnosis application module is used to diagnose the client to-be-diagnosed equipment set and report the potential risks of failure of the vehicle to a user and/or a manager, the diagnosis task management module is used to generate the diagnosis task scripts and checking a plurality of diagnosis result history records, and the user management module is used to generate a plurality of new users and grant corresponding platform permissions.

3. The smart system for vehicle fault prediction according to claim 1, wherein the smart analysis engine further includes an expert system and a fault code calculation module; the expert system includes a vehicle electronic control unit topology map, the fault code calculation module is used to perform calculation matching and derive the potential risk of failure of the vehicle targeting at a plurality of sensors, a power system, and/or the electronic control unit topology map of the vehicle.

4. The smart system for vehicle fault prediction according to claim 3, wherein the expert system further includes data identifiers and standardized fault codes for each of the high-level electronic control units and the low-level electronic control units.

5. The smart system for vehicle fault prediction according to claim 1, wherein the security module and the diagnostic module are connected through a controller area network and perform data exchange, security authentication, and read and write operations to the high-level electronic control units the low-level electronic control units through the unified diagnostic service client of high-level electronic control units and the unified diagnostic service client of low-level electronic control units.

6. A smart method for vehicle fault prediction, comprising the following steps:
a diagnostic management platform generating a diagnostic vehicle information of a vehicle and a diagnostic task script corresponding to the vehicle, wherein the vehicle having a client to-be-diagnosed equipment set, the client to-be-diagnosed equipment set comprising a unified diagnostic service server for high-level electronic control units, a unified diagnostic service server for low-level electronic control units, a plurality of high-level electronic control units, and a plurality of low-level electronic control units, the unified diagnostic service server of high-level electronic control units being connected to the high-level electronic control units, and the unified diagnostic service server of low-level electronic control units being connected to the low-level electronic control units;
an in-vehicle diagnostic engine of an in-vehicle diagnostic system receiving and parsing the diagnostic task script, wherein the in-vehicle diagnostic system being installed on an electronic control unit in the vehicle, wherein the in-vehicle diagnostic system comprising the in-vehicle diagnostic engine, a host/client interaction module, a safety module, a diagnostic module, a unified diagnostic service client of high-level electronic control units, and a unified diagnostic service client of low-level electronic control units, the in-vehicle diagnostic engine being connected to the host/client interaction module, the safety module, and the diagnostic module;
the host/client interaction module obtaining a vehicle status and information of the vehicle;
the safety module and the diagnostic module using the unified diagnostic service client of high-level electronic control units and the unified diagnostic service client of low-level electronic control units to perform data exchange, security authentication, and read and write operations to the high-level electronic control units and the low-level electronic control units with the unified diagnostic service server of high-level electronic control units and the unified diagnostic service server of low-level electronic control units of the client to-be-diagnosed equipment set; and
the in-vehicle diagnostic engine transmitting a diagnostic result to the diagnostic management platform, and the diagnostic management platform then transmitting the diagnosis results to a database, the database storing the diagnosis result and transmitting the diagnosis result to a smart analysis engine, and the smart analysis engine analyzing the diagnosis result and inferring potential risks of failure of the vehicle.

7. The smart method for vehicle fault prediction according to claim 6, wherein the diagnosis management platform further includes a vehicle management module, a remote diagnosis application module, a diagnosis task management module, and a user management module; the vehicle management module is used to generate a vehicle to-be-diagnosed list, the remote diagnosis application module is used to diagnose the client to-be-diagnosed equipment set and report the potential risks of failure of the vehicle to a user and/or a manager, the diagnosis task management module is used to generate the diagnosis task scripts and checking a plurality of diagnosis result history records, and the user management module is used to generate a plurality of new users and grant corresponding platform permissions.

8. The smart method for vehicle fault prediction according to claim 6, wherein the smart analysis engine further includes an expert system and a fault code calculation module; the expert system includes a vehicle electronic control unit topology map, the fault code calculation module is used to perform calculation matching and derive the potential risk of failure of the vehicle targeting at a plurality of sensors, a power system, and/or the electronic control unit topology map of the vehicle.

9. The smart method for vehicle fault prediction according to claim 8, wherein the expert system further includes data identifiers and standardized fault codes for each of the high-level electronic control units and the low-level electronic control units.

10. The smart method for vehicle fault prediction according to claim 6, wherein in the step of the host/client interaction module obtaining a vehicle status and information of the vehicle, the host/client interaction module confirms the current vehicle status of the vehicle, comprising vehicle speed, gear, or power, to avoid the high-level electronic control units and these low-level electronic control units affect driving safety during diagnosis.
